# EUROPEAN PATENT APPLICATION

(11) **EP 3 046 065 A1**
(43) Date of publication of application: **20.07.2016**
(21) Application number: 15154437.6
(22) Date of filing: 10.02.2015
(51) Int. Cl.: G06Q 40/02, G06Q 20/08, G06Q 20/40

(54) **System of business banking and management**

(30) Priority: 14.01.2015 US 201514596994
(71) Applicant: Wang, Zilin, Kitimat, British Columbia V8C 2E2 (CA)
(72) Inventor: Wang, Zilin, Kitimat, British Columbia V8C 2E2 (CA)
(74) Representative: Hocking, Adrian Niall

(57) **Abstract**

In reference to Figure 2, a business banking and management system (201) contains a few components, including sub-systems, databases and shopping mall (206). In this system, the member account can be associated with different identifiers (401), and each of the identifier can get access to the member account. Changes from transactions are saved into an account for future use. When a non-member individual or business accepts a payment or a transfer from a member of this system, the non-member individual or business will automatically become a new individual member or business member of the system. The point of sale at each business member venue functions as a front desk of the business banking and management system. In this way, the business banking and management system (201) becomes an integral unit formed of a banking system, a management system of a retail business and an online shopping mall.

## Description

### FIELD OF THE INVENTION

The present invention relates generally to a system and method for business banking and management. More specifically, it is a system and method for providing consumers (members) a convenient banking and payment service and providing business a system to manage and attract consumers.

### BACKGROUND OF THE INVENTION

When a customer is buying an item or order a service at a store, restaurant, bar and the like, especially if the customer is paying cash, it is very possible that the customer will receive a change. It may not be convenient to store those changes at a place, not lose those small coins and at the same time, make them readily available whenever the customer wants to use them. It is safe and easy to save them at home. However, when there is a chance to use it, it would be very inconvenient to go back home to get them. On the other hand, if they are carried with a person, they will always be ready to use; however, since a person needs to do a lot of different activities every day, walking, working, driving, shopping and etc, it is inconvenient to carry those coins all the time, and it is pretty easy to lose one or a few coins during daily activities. In this regard, it is in a need to have a mechanism to save those changes and make them ready to spend all the time.

Moreover, as for retailers and service providers, they need to deal with the changes, too. They need to make changes to consumers. They need to store enough coins and small cashes to make changes; their employees need to spend a lot of time to count those coins and small cashes whenever they are involved in a transaction. It is true that each time it may only take a short time to count it. However, the accumulated result is actually quite remarkable. Say, if it takes 3 minutes to finish a transaction with a consumer, then a clerk may finish about 150 transitions per day. If changes are involved in about one third of the transactions and for each of those transactions, one third of its total transaction time has been spent to count changes, then for each clerk, he or she may need to spend 150 minutes per day for counting the changes. If this number is still not impressive, when we put into consideration the overall point of sales (for example, 10 checking out sites) in a store and the time period of a year, this number would be within the range of 0.4 to 0.5 million minutes per year. In this regard, it would be a significant benefit for a retailer to eliminate the change counting.

In light of the foregoing, saving the changes into an account that is available to spend all the time seems to be a way to solve the problem and bring convenience and efficiency to both individual consumers and retailers or service providers. However, to open a new account is not easy, for both individual consumers and for businesses. In order to open an account, an individual needs to go to a bank, provide all the required information and after the new account has been opened, the person need to remember its password, pin number, and needs to put one more card into the wallet. As for the business, they need to setting connections and transactions with every bank that one of its customers may have such an account.

Therefore, it is one objective of the present invention to provide an easy way to allow individual consumers to save the changes into an account and the account can be used in the future at different businesses. Moreover, this account is actually an integral part of a business's banking and management system, rather than an extra bank system that the business needs to deal with. In this way, both individual consumers and business could benefit from it. Moreover, many value added services could be further added into such a system.

### BRIEF DESCRIPTION OF THE DRAWINGS

Figures 1A to 1F show the hardware equipment of the present invention.

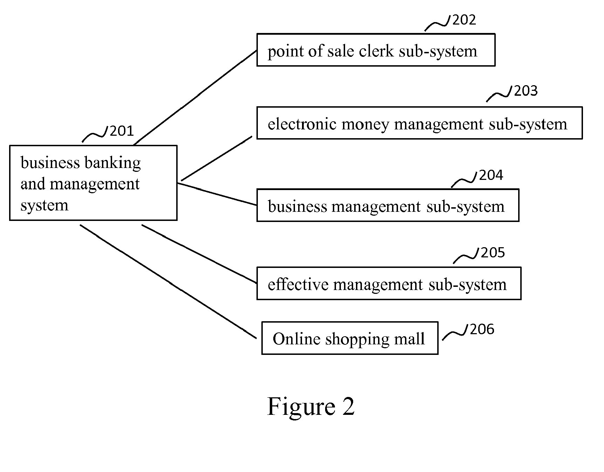

Figure 2 shows the subsystem structure of the present invention.

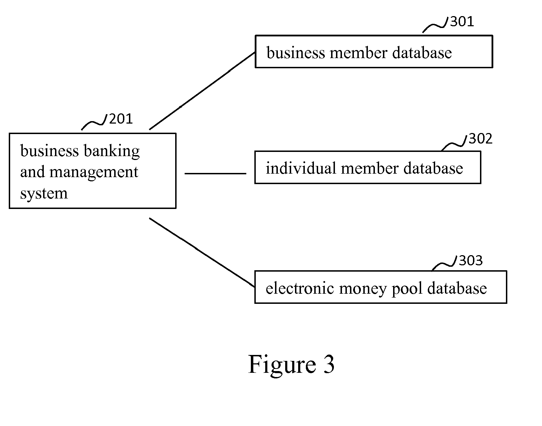

Figure 3 shows the databases in the present invention.

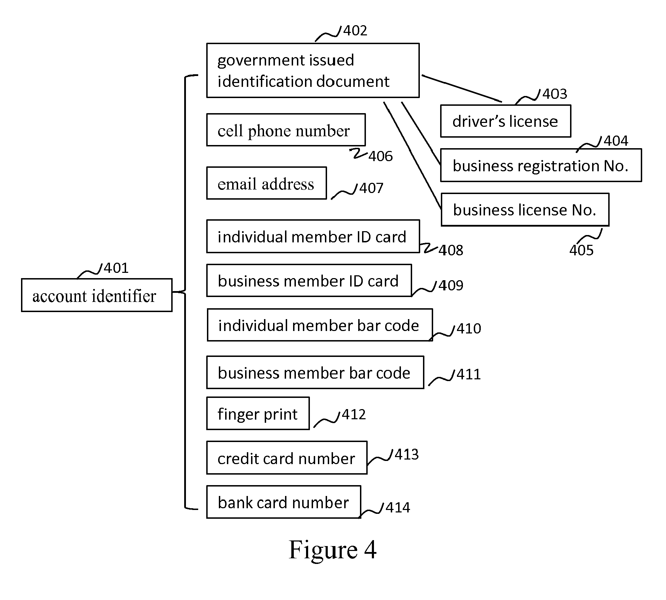

Figure 4 shows the account identifiers of the present invention.

### DETAIL DESCRIPTIONS OF THE INVENTION

All illustrations of the drawings are for the purpose of describing selected versions of the present invention and are not intended to limit the scope of the present invention.

The present invention is a system for business banking and management. This system includes two portions. A consumer can open an account to save changes received from different transactions at different locations of different businesses. In addition, a consumer can depot money or withdraw money from this account.

In particular, a consumer does not need to go to a bank to open such an account and does not need to remember an extra account number, password and/ or pin number of this new account. Rather, any government issued identification document, such as a person's driver's license can be used as an account number for such an account. It is noted that it is not necessary that for one account, there is only one account number. On the country, a plurality of different identification method can be used as an account number of such account, including, but not limited to, driver's license, birth certificate, or any other government issued documents or certificate, license and so on. Each of them can be used to get access to this account.

As for a business, with the system of the present invention, its point of sale functions as a banking desk to service this account, to deposit changes, withdraw or cash money and etc. In addition, the business who is a member of the system would be able to get access and promote for the population of holders of this account, provide value added service or discounted items to the holders of this account; and at the same time, receive more business from holders of this type of accounts.

In the account, there are three types of assets. One is cash, which is recorded as an amount of US dollars. Any changes, cash deposit, cash transfer in and the like will be added into the account as US dollars. The US dollars can be freely spent, withdrawn, cashed out, or transferred to another person who also has such an account, or transferred to a person's banking account if this person does not have such an account. Another one is points. The points can be used to make purchase, get discount. The points can be transferred to another person's such an account within the system of the present invention. However, the points cannot be withdrawn or cashed out as US dollars; and cannot be transferred to another person's banking account. In addition, the US dollar in the account can be converted to points. However, the points cannot be converted into US dollars. The third one is a virtual stock of the banking system of the present invention. The virtual stock can be traded within the system.

The present invention can be operated on any computing device that can get access to the Internet, including computer, desktop or laptop, tablet, mobile phone and other similar devices.

More specifically, the present invention comprises the various systems set forth below. It includes a point of sale clerk sub-system 202. This sub-system includes the mechanism of saving transaction changes into the account, making deposit into the account, making purchase with the US dollars or points available in the account, making cash out of the US dollars available in the account, transferring US dollars or points between different accounts within the system, transferring US dollars or points between consumer account and business account within the system, receiving rewarding points from a business, as well as spending points available in the account to get a reward item.

The point of sale clerk system of the present invention further includes a member participation inventive mechanism. For example, for every new member (individual member) of the present invention, at the time point when the individual opening a new account as described in the present invention, the individual will receive 100 points as a reward. In addition, member is encouraged to deposit money into their account for future purchase.

In addition, as already described, members are allowed to make a purchase with either US dollar or points. Many products may be offered of a discount price for members who are using the US dollars or points make the purchase. Moreover, the US dollars saved in the individual account are equal to one dollar of the US currency and can be freely cashed out at any one of the point of sale in a store. The US dollars or points saved in an account can be transferred to another member's account as gift, payment and the like. In addition, both the US dollars and points in an individual account can be transferred to another individual who is currently not a member. Following such transfer of point or US dollars have been accepted by the non-member individual, this non-member individual will automatically become a member of the present invention. In this way, the system of the present invention is able to expand quickly.

Besides, the points and US dollars saved in an account can be further transferred between individual accounts and business accounts. It is noted that whenever an individual or a business that is currently not a member of the present invention has accepted the transferred US dollars or points, this individual or business would automatically become a member of the present invention. Accordingly, both the business member and individual member of the present invention would be able to expand quickly.

One unique feature of the present invention is that when an individual makes a purchase, no matter online or in a store, the change will be directly saved into the individual's account in the present invention. It is convenient for both business members and individual members. As for the business members, they do not need to store a considerable amount of coins and small cash for make changes, nor need to count the coins and small cash whenever a change is involved in a transaction. As for the individual members, it is convenient for those members as well; since they do not need to store the change with them yet such changes are always ready to spend whenever the individual member needs to make a new purchase.

Additionally, the points can be used as a reward or incentive for an individual member. For example, when an individual member makes a purchase from a business member of the present invention, the purchaser may receive a certain amount of points as a reward, which can be used for future purchase from any business member. In addition, on an irregular basis, the points can be used to redeem a gift, a product and the like.

Through all of the approaches mentioned above, the present invention will attract more and more individual and business members.

The present invention includes an electronic money management sub-system 203. The electronic money management sub-system contains US dollar and points. As mentioned previously, the US dollar is just like US currency. It can be used for product purchase, making payment, money transfer and cash out as well. On the other hand, the point has an equal value as the US dollar in the account, wherein one point is equal to one US dollar. It is noted that the points can be used for product purchase, making payment and transferring among different account. However, the point cannot be cashed out from the account.

As a part of the present invention, a transaction terminal system may include the types of interfaces set forth below, point of sale at a store, which primarily deals with product purchase and payment in the store; personal computer, which can be used for online purchase and making online payment; mobile phone, especially smart phone, which can be used for making purchase, payment or payment in advance in a restaurant or bar. As just mentioned, any of the above mentioned interfaces can be used for money or point transfer and making payment.

In addition, the present invention also comprises a business management sub-system **204**. This business management system is able to manage product inventory and product prices. The product inventory management is in charge of monitoring product stocks, inventory, ordering respective products from manufacturers or wholesalers. The price management is responsible for managing and altering product prices.

The inventory management is able to provide a one key stock or inventory report, a one key order information report. Further, when the inventory of a product exceeds its pre-determined upper limit or lower limit, the system is able to automatically send a warning to the business to information about the situation. In addition, when products enter the inventory or removed from the inventory, the inventory management of the present invention will automatically provide a detailed report.

Furthermore, the present invention also includes an online shopping mall **206**. In the online shopping mall, a business member is able to display their product, make product demonstration and promotion. As for the individual member, they are able to get access of various promotions available on in the online shopping mall, receive discounts or rewards and so on.

By virtue of the present invention, business members are able to make various promotions in order to attract more customers or individual members. For example, individual member may be offered of a certain amount of points or a discount price in a promotion. In addition, the business member may do a combination of online and offline promotion or demonstration and so on.

The present invention also comprises an effective management sub-system **205** to manage various types of member and their accounts. It includes individual member management, business member management, clerk terminal management, individual member group management and business member group management. The management sub-system would provide an incentive (such as points) for each new member, including new individual member and new business member. In addition, it also includes a referral mechanism, in which anyone who refers a new member to join the system of the present invention would receive certain reward.

Business member can utilize the present invention to manage cash flow, make cash and points circulated within the system of the present invention. In this way, the cash would stay inside the system of the present invention, which may be further lent as loans. Further, business member would be evaluated and provided a credit score based on their business actions.

In addition to the foregoing, the present invention is also able to provide normal front end and backend service that a business bank can offer.

The business banking and management system **201** of the present invention can be adopted in a wide variety of different fields, including, but not limited to stores, such as supermarket, grocery store, department store, discount store and convenient store, restaurant, bar, company, hotel, hospital, school, bank, as well as other organization and government agencies. In general, the system of the present invention would be appropriate for any organization or individual that has been involved in some monitory transactions or paid service.

In light of the foregoing description, it could be known that the present invention has the specific features set forth below, which has distinguished the system of the present invention from other similar systems in the field.

The present invention is a novel banking and management system which integrated business and banking system into one unit. The banking system of the present invention has taken advantages of the resources already available, including the points of sale of each store, restaurant and bar. By virtue of converting them into business desks of the banking system of the present invention, the present invention does not need to open a single bank location yet its business outlets and locations could be more than any bank in the world, since potentially any store, bar, restaurant, and the like could be a business branch of the banking system of the present invention. I this way, with embedding the banking platform of the present invention into each point of sale of every business member, the present invention could be the banking system that has the most business outlets and locations in the world.

Additionally, in the present invention, a member can use any identification that he or she already has as one of the account identifier **401.** That is to say, a plurality of account identifiers may be associated with a member account. The member may use any one of them that he or she preferred or that is at hand to get access to the account. Such account identifiers include, but are not limited to government issued identification documents **402,** such as driver's license **403,** business registration number **404,** business license number **405,** and so on. In other words, an individual does not need to open an account with the banking system of the present invention, yet the account is already available for them, one just needs to do something to activate the account already prepared for him or her, which is linked to his or her government issued identifications. In addition, other unique identifications may also be used in the present invention. For example, email address **407,** cell phone number **406,** individual member ID **408,** business member ID **409,** individual member bar code **410,** business bar code **411,** finger print **412,** credit card number **413,** bank card number **414,** and so on.

On the other hand, as for the business members, a government issues identification documents, such as business registration No. or business license can be used as one of the plurality of account identifiers of a business member account. In this way, a business member does not need to open an account as the account is already ready for it. The only thing that it needs to do is to activate that account associate with its registration No. or license No.

As mentioned previously, a point of sale for checking out can function as a business desk of the banking system of the present invention. Such point of sale may be a checking out desk of at a store, a restaurant, a hotel, a bar and so on. In this way, the transaction and banking functionalities have been integrated together into one unit. Therefore, space and labor, as well as time, could be saved. In addition, since the changes from each transaction has been saved the individual member account, no change will be counted, stored and carries, which is significant beneficial to the business and to the consumer as well.

In a case that repeating transactions are expected at a specific venue, for example, a consumer may order a number of wines or liquors at a bar for the whole night, he or she can use the individual account of the present invention to pre-deposit a certain amount of money into this amount for the anticipated consumptions of the whole night. Accordingly, the consumer does not need to make a payment with credit card or bank card every time when he or she needs to order a new one. In this case, when the consumer needs to make a new order, he or she just needs to go to the front desk and get his or her ID or driver's license scanned. If there is a remaining in account after the whole night consumption, it would be optionally saved in the account for future use or get it cashed out at that venue.

In addition, as mentioned previously, a new member does not need to bother to open a new account, the account is actually ready (associated with the government issued identification document) to be activate. A simple action, including accept a money transfer or a payment, will results in the activation of the member account. And the foregoing is true for both individual member account and business member account.

Further, with the particular structure of the banking and management system of the present invention, every member of the system is actually a potential promoter of the present invention, when they make a payment or transfer money or points to another non-member individual or business, whenever that non-member individual or business accepts that payment or transfer, the non-member individual or business automatically become a member of the banking system of the present invention. In addition, the old individual or business member is allowed to manage and thus benefit from the new account opened by their introduction, promotion, referral and the like. In this way, the old members would be motivated to introduce more new member to join the banking and management system of the present invention.

As the changes have been saved in the member account, the consumer member would have the motivation to come back to make more purchase or transactions. On the other hand, as for the business members, they can benefit from the system of the present invention by sell, demonstrate or promote their products or services in the online shopping mall. Additionally, most business members would prefer to find their upstream or downstream business partners within the system of the system of the present invention. Accordingly, industrial chains would be formed within the system of the present application/ invention.

Moreover, the present invention also includes providing guarantees for international trades. The present invention has an encouraging development prospect as a new individual member may bring in a store as a new business member and a business member may bring in its entire customer population as new individual members.

It is noted that in addition to the government issued identification documents, cell phone number, email address, credit card number, banking card, individual member ID card or bar code, business member ID card or bar code, finger print and etc may be used as an identifier of a member account. A member account can have a plurality of different identifiers.

In addition, the banking system is built on a collection of different businesses, such as stores, bars, restaurants and so on. The present invention has provided a very convenient business hours and locations.

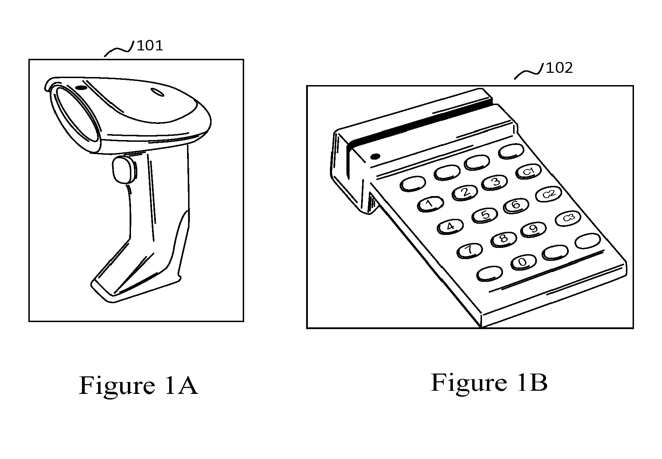

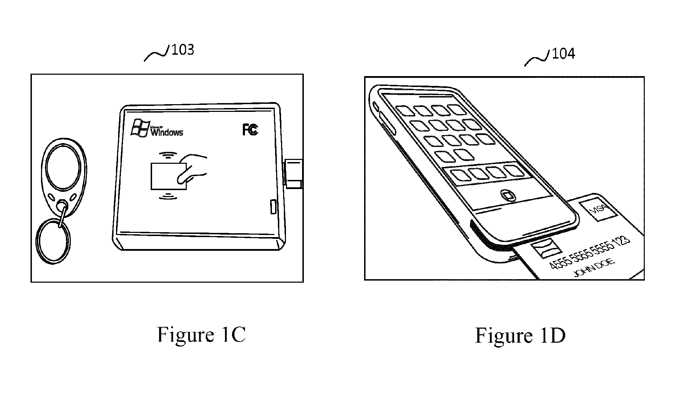

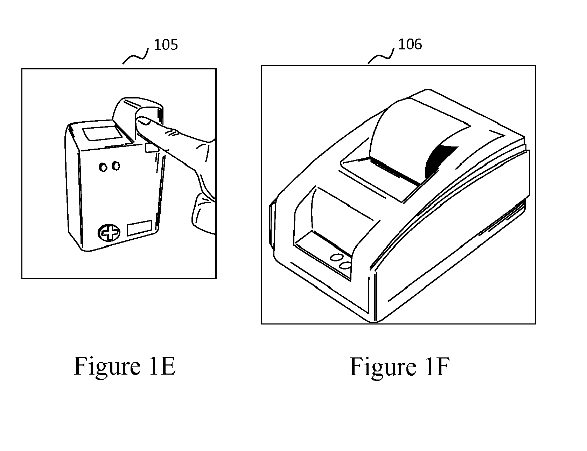

The present invention includes a plurality of different types of hardware devices, as shown in Figures 1A to 1F. An ID card reading device is able to read the ID card issued by the government. This ID card reading device may be a bar code or two dimensional bar code reader **101,** a magnetic stripe reader **102** or an IC card or ID card reader **103.** A banking card reader is able to read bank card **104,** debit card or credit card, which can be used to transfer money from a bank account to a member account of the present invention. Another device is able to read the ID card issued by the banking system of the present invention. Further, the present invention also include a device for number or password input for identification; a finger print reading device **105** used for identify a member by reading his or her finger print, as well as a specific device **106** for printing receipt or other documents.

The system of the present invention can be run on different hardware platforms, including desktop and laptop computer, tablet computers, mobile phones, and other computing devices that is able to connect to the Internet. As for the software platforms, it may be run with Windows, iOS and android systems, with Firefox Explorer as the designated browser.

The present invention also comprises a plurality of databases. It includes a business member database **301.** For each business member, it has a store clerk information table, which includes the information of the clerks of the business member; a business information table that include business information, a product and price information table, which stores the products' information such as price and inventory; a product sale information table to store product selling information; a cash flow table to save business cash flow information; and a business accounting table, which includes business accounting information including the balance.

It also comprises an individual member database **302.** For each individual member, there are an individual information table, which saves detailed individual information; an order information table, which saves the order made within the system by an individual member; an product ordering statistical table, which saves statistical ordering information of an individual member; a cash flow table, which saves cash flow information of an individual member; a cash flow statistical table, which saves statistical information of cash flow; and a individual accounting table, which saves individual account information including the balance.

The present invention also includes a third database, an electronic money pool database **303**. Each table below includes the relevant information of the collection of all members. The database includes an individual accounting table, which saves personal accounting and balance of each individual member; an individual cash flow table, which saves personal cash flow information of each individual member; an individual cash flow statistical table, which saves personal statistical cash flow information of each individual member; a business accounting table, which saves business accounting and balance information of each business member; a business cash flow table, which saves business cash flow information of each business member; and a business cash flow statistical table, which saves business statistical cash flow information of each business member. It is noted that the balance includes US dollar balance, point balance, and virtual stock balance. The present invention also includes an incentive to offer virtual stocks of the banking system of the present invention to individual member and business members. The virtual stocks can be traded within the system of the present invention.

It is anticipated that with the employment of the banking and management system of the present invention, the companies would gain significant benefits. Moreover, due to the specific features described above, the banking and management system of the present invention would be a banking system with the most business outlets and locations, since each point of sale in every business member store would essentially become a business desk of the banking system of the present invention.

Although the invention has been explained in relation to its preferred embodiment, it is to be understood that many other possible modifications and variations can be made without departing from the spirit and scope of the invention as herein described.

## Claims

1. A business banking and management system (201), comprising
a plurality of sub-systems;
a plurality of databases;
an online shopping mall (206);
a plurality of account identifiers (401) corresponding to an account; and
each of the plurality of account identifiers being equally allowed to get access to the account.

2. The business banking and management system as claimed in claim 1, comprising
the plurality of sub-systems comprising a point of sale clerk sub-system (202);
the point of sale clerk sub-system (202) comprising a mechanism of saving a transaction change to an individual member account;
the point of sale clerk sub-system (202) comprising a mechanism of cashing out from the individual member account;
the point of sale clerk sub-system (202) comprising a mechanism of making a transfer from the individual member account to another individual member account;
the point of sale clerk sub-system (202) comprising a mechanism of making a transfer from the business member account to an individual member account; and
the point of sale clerk sub-system (202) comprising a mechanism of making a transfer from the business member account to another business member account; and
the point of sale clerk sub-system (202) comprising a mechanism of making a transfer from the individual member account to a business member account; and
the point of sale clerk sub-system (202) comprising a mechanism of incentive offering for a new member.

3. The business banking and management system as claimed in claim 1, comprising
the plurality of sub-systems comprising an electronic money management sub-system (203);
the electronic money management sub-system (203) comprising a cash valued as US dollar, points and a virtual stock of the system;
the cash being convertible to the points;
the points being forbidden from being converted to the cash; and
the virtual stock of the system being tradable within the business banking and management system (201).

4. The business banking and management system as claimed in claim 1, comprising
the plurality of sub-systems comprising a business management sub-system (204); and
the business management system (204) comprising a product price management and a product inventory management.

5. The business banking and management system as claimed in claim 1, comprising
the plurality of sub-systems comprising an effective management sub-system (205); and
the effective management sub-system (205) comprising an individual member management, a business member management, a clerk terminal management, an individual member group management and a business member group management.

6. The business banking and management system as claimed in claim 1, comprising
the plurality of databases comprising a business member database (301), an individual member database (302) and an electronic money pool database (303).

7. The business banking and management system as claimed in claim 1, comprising
the plurality of account identifiers (401) comprising a government issued identification document (402), a cell phone number (406), an email address (407), an individual member ID card (408), a business member ID card (409), an individual member bar code (410), a business member bar code (411), a finger print (412), a credit card number (413) and a bank card number (414).

8. The business banking and management system as claimed in claim 7, comprising
the government issued identification document (402) comprising a driver's license (403), a business registration number (404) and a business license number (405).

9. The business banking and management system as claimed in claim 1, comprising
the banking and management system (201) being operated on a computing device, wherein the computing device comprising a desktop computer, a laptop computer, a mobile phone, and a tablet computer.
